(19) Europäisches Patentamt
European Patent Office
Office européen des brevets

(11) **EP 4 352 569 B1**

(12) **FASCICULE DE BREVET EUROPEEN**

(45) Date de publication et mention de la délivrance du brevet:
**25.02.2026 Bulletin 2026/09**

(21) Numéro de dépôt: **22733700.3**

(22) Date de dépôt: **31.05.2022**

(51) Classification Internationale des Brevets (IPC):
**G02F 1/095** (2006.01)    **G02B 6/24** (2006.01)
**G02B 6/42** (2006.01)

(52) Classification Coopérative des Brevets (CPC):
**G02F 1/0955; G02B 6/4206; G02B 6/4214;**
G02B 6/4225

(86) Numéro de dépôt international:
**PCT/FR2022/051030**

(87) Numéro de publication internationale:
**WO 2022/258910 (15.12.2022 Gazette 2022/50)**

(54) **ASSEMBLAGE PHOTONIQUE COMPRENANT UN COMPOSANT PHOTONIQUE COUPLÉ OPTIQUEMENT À UN ÉLÉMENT PHOTONIQUE**

PHOTONISCHE ANORDNUNG MIT EINEM OPTISCH MIT EINEM PHOTONISCHEN ELEMENT GEKOPPELTEN PHOTONISCHEN BAUELEMENT

PHOTONIC ASSEMBLY COMPRISING A PHOTONIC COMPONENT OPTICALLY COUPLED WITH A PHOTONIC ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.06.2021 FR 2106060**

(43) Date de publication de la demande:
**17.04.2024 Bulletin 2024/16**

(73) Titulaire: **Scintil Photonics**
**38000 Grenoble (FR)**

(72) Inventeurs:
• **MENEZO, Sylvie**
**38000 Grenoble (FR)**
• **MAZUR, Frédéric**
**38000 Grenoble (FR)**

(74) Mandataire: **IP Trust**
**2, rue de Clichy**
**75009 Paris (FR)**

(56) Documents cités:
**US-A1- 2017 254 959    US-A1- 2021 063 779**
**US-B1- 7 263 247    US-B1- 9 335 480**

## Description

### DOMAINE DE L'INVENTION

La présente invention se rapporte au domaine de la photonique, et concerne plus particulièrement un assemblage d'un dispositif photonique et d'un élément photonique externe. Notamment, la présente invention est relative à l'optimisation du couplage optique entre le dispositif photonique et l'élément photonique.

### ARRIERE PLAN TECHNOLOGIQUE DE L'INVENTION

L'émergence des composants photoniques dans les domaines des communications optiques guidées s'est accompagnée du développement de moyens et de méthodes de couplage optique entre différents composants ou circuits photoniques (dispositifs photoniques) et d'autres éléments photoniques tels que des fibres optiques. A titre d'exemple le document US 9 335 480 B1 (CELO DRITAN [CA]) 10 mai 2016 (2016-05-10) divulguant une méthode facilitant le couplage entre une fibre mono mode et un circuit photonique . Notamment, il est connu un assemblage entre un dispositif photonique pourvu d'une source laser avec un élément photonique externe tel qu'une fibre optique.

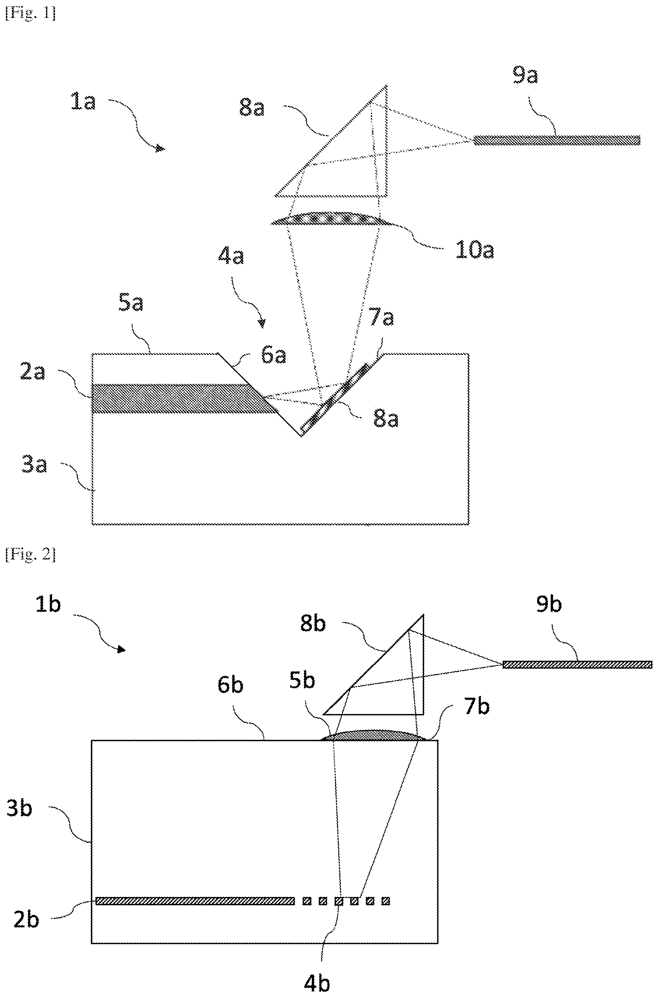

A titre d'exemple, la figure 1 et la figure 2 illustrent chacune un couplage, dit couplage par la surface, entre un dispositif photonique et un élément photonique externe. Notamment, la figure 1 représente un dispositif photonique 1a pourvu d'un guide d'onde 2a, enterré dans un substrat 3a. Une cavité 4a est par ailleurs formée à partir d'une face avant 5a du dispositif photonique 1a. Ladite cavité comprend notamment deux faces 6a et 7a . En particulier, la cavité 4a est formée de sorte que le guide d'onde 2a débouche selon une de ses extrémités par la face 6a. Le dispositif photonique 1a comprend également un miroir 8a, reposant sur la face 7a. Un tel agencement permet d'extraire du dispositif photonique 1a un rayonnement, par exemple émis par un laser (non représenté) et guidé par 1e guide d'onde 2a. Notamment, un rayonnement débouchant par la face 6a est réfléchi par l'élément réflecteur 8a selon une direction hors d'un plan formé par la face avant 5a. La mise en œuvre d'une lentille 10a et d'un prisme 8a permet de rediriger le rayonnement extrait vers une entrée d'un élément photonique 9a qui comprend par exemple un guide d'onde ou une fibre optique.

La figure 2 représente un autre dispositif photonique 1b pourvu d'un guide d'onde 2b, enterré dans un substrat 3b. Le guide d'onde 2b est par ailleurs terminé selon une de ses extrémités par un réseau de diffraction 4b. En particulier, le réseau de diffraction 4b est configuré pour projeter un rayonnement lumineux, par exemple émis par un laser (non représenté) et guidé par le guide d'onde 2b, en direction d'une sortie 5b disposée sur une face avant 6b du dispositif photonique 1b. Un tel agencement permet ainsi d'extraire un rayonnement lumineux par la face avant 6b du dispositif photonique 1b. La mise en œuvre d'une lentille 7b et d'un prisme 8b permet de rediriger le rayonnement extrait vers une entrée d'un élément photonique 9b qui comprend par exemple un guide d'onde ou une fibre optique.

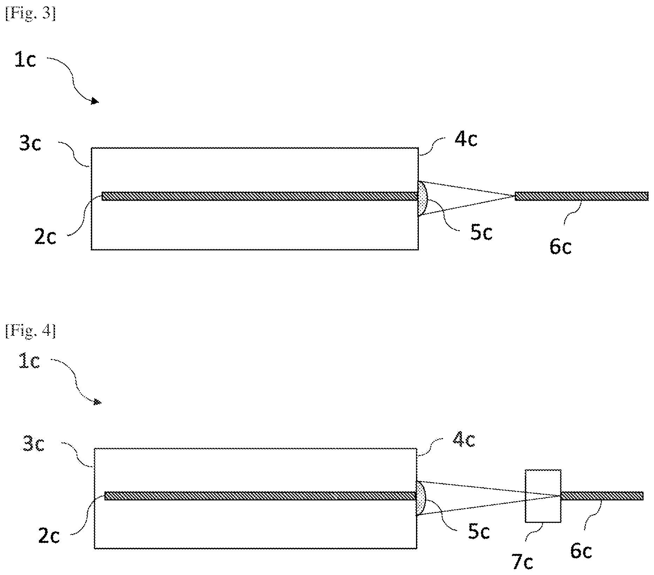

Toujours à titre d'exemple, la figure 3 illustre un mode de couplage dit couplage par la tranche entre un dispositif photonique 1c et un élément photonique 6c. Le dispositif photonique 1c est pourvu d'un guide d'onde 2c, enterré dans un substrat 3c. Le guide d'onde 2c débouche, par une de ses extrémités, sur une face latérale 4c (ou tranche) du dispositif photonique 1c. En d'autres termes, un rayonnement, émis par exemple par un laser (non représenté) et guidé par le guide d'onde 2c, est extrait du dispositif photonique 1c directement par la face latérale 4c de ce dernier. Une lentille 5c peut alors être mise en œuvre pour coupler le rayonnement extrait à un élément photonique 6c qui comprend par exemple un guide d'onde.

Il est toutefois des situations pour lesquelles il est souhaitable d'assurer une unidirectionnalité de la propagation du rayonnement lumineux lors de son extraction du dispositif photonique. En effet, le rayonnement extrait d'un dispositif photonique est susceptible de subir des réflexions, et ainsi être pour partie réinjecté dans le dispositif photonique et in fine dans le laser qui l'a produit. Ce phénomène a pour effet de dégrader le spectre d'émission du laser et, par voie de conséquence, les performances du dispositif photonique.

Afin de pallier ce problème, il est généralement proposé de mettre en œuvre un isolateur optique disposé sur le trajet du rayonnement extrait entre le dispositif photonique et l'élément photonique à coupler optiquement. La figure 4 reprend, à titre d'exemple, le dispositif de la figure 3 et dans lequel un isolateur optique 7c est interposé entre 1a lentille 5c et l'entrée de la fibre optique 6c. L'isolateur optique impose une propagation lumineuse dans un sens unique et permet d'éviter les réflexions parasites susceptible d'affecter les performances du dispositif photonique.

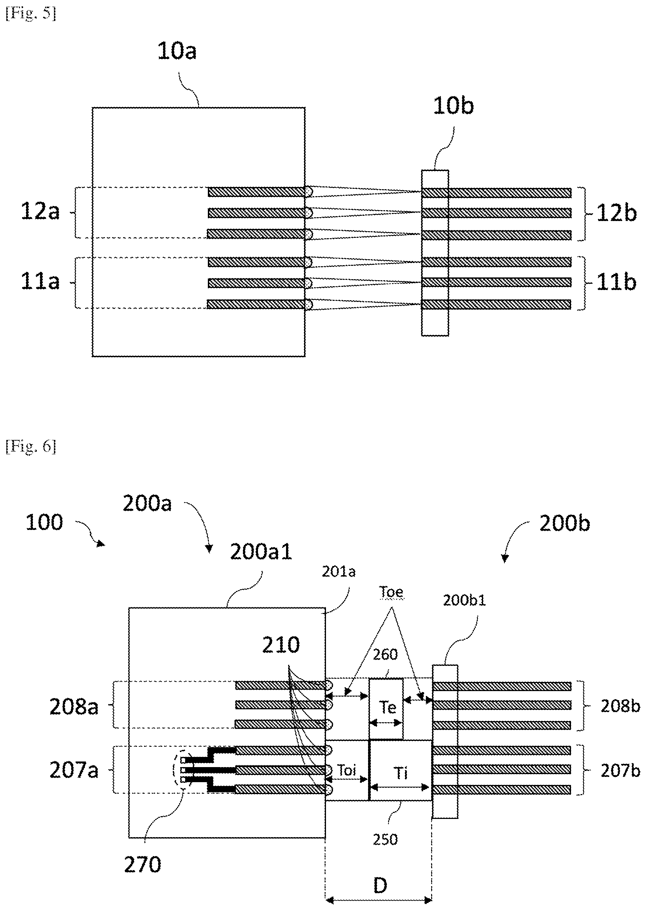

Néanmoins, cette solution présente des limites dès lors que le dispositif photonique comprend, en plus d'une extraction lumineuse, des zones, dites zones d'entrée, par lesquelles un rayonnement est susceptible d'être injecté dans le dispositif photonique. A cet égard, la figure 5 est une illustration d'un couplage optique par la tranche, selon une vue de dessus, d'un dispositif photonique 10a avec un élément photonique 10b. Le dispositif photonique 10a peut comprendre un réseau de lasers (non représentés, intégrés ou non) dont les rayonnements sont guidés par des guides d'onde, dits premiers guides d'onde d'extraction 11a. Le dispositif photonique 10a comprend également des guides d'onde, dits premiers guides d'onde d'entrée 12a, et destinés à recevoir un rayonnement lumineux externe. L'élément photonique 10b comprend des deuxièmes guides d'onde d'extraction 12b et des deuxièmes guides d'onde d'entrée 11b optiquement couplés, respectivement, avec les premiers guides d'onde d'entrée 12a et les premiers guide d'onde d'extraction 11a. Le composant photonique 10b peut être un composant passif, et comprendre par exemple un réseau de fibres optiques.

Selon cet agencement, des rayonnements lumineux sont susceptibles de se propager selon deux sens opposés. Notamment, une première série de rayonnements est susceptible de se propager des premiers guides d'onde d'extraction 11a vers les deuxièmes guides d'onde d'entrée 11b. De manière équivalente, une deuxième série de rayonnements est susceptible de se propager des deuxièmes guides d'onde d'extraction 12b vers les premiers guides d'onde d'entrée 12a.

Aussi afin d'optimiser les performances du couplage, les rayonnements de la première et de la deuxième série doivent présenter une taille de mode sensiblement équivalentes. Toutefois, la mise en œuvre d'un isolateur optique afin d'assurer une unidirectionnalité sur le trajet de propagation de la première série de rayonnements n'est pas sans conséquences. En effet, l'isolateur optique modifie la taille de mode des rayonnements de la première série de sorte ces derniers ne présentent plus une taille de mode sensiblement équivalente à celle des rayonnements de la deuxième série. En d'autres termes, la mise en œuvre d'un isolateur optique, sans autres précautions, ne permet d'optimiser les couplages à la fois entre les premiers guides d'onde d'extraction 11a et deuxièmes guides d'onde d'entrée 11b d'une part et entre les deuxièmes guides d'onde d'extraction 12b et les premiers guides d'onde d'entrée 12a d'autre part.

Un but de la présente invention est donc de proposer un couplage optique entre un dispositif photonique et un élément photonique et permettant de palier les inconvénients susmentionnés.

## BREVE DESCRIPTION DE L'INVENTION

Le but de l'invention est atteint par un assemblage photonique qui comprend :

- un dispositif photonique comprenant un premier bloc pourvu d'au moins un guide de sortie et d'au moins un guide d'entrée coopérant avec, respectivement, au moins une première sortie et au moins une première entrée disposées sur une première face du premier bloc ;
- un élément photonique pourvu d'au moins une deuxième sortie et d'au moins une deuxième entrée , disposées sur une deuxième face de l'élément photonique, et optiquement couplées avec, respectivement, l'au moins une première entrée et l'au moins une première sortie ;
- un isolateur optique s'interposant sur le trajet de propagation lumineuse, dit premier trajet, entre l'au moins une première sortie et l'au moins une deuxième entrée , et imposant à un rayonnement, se propageant selon le premier trajet, une première taille de mode ;
- des moyens d'ajustement s'interposant sur le trajet de propagation lumineuse, dit deuxième trajet, entre l'au moins une première entrée et l'au moins une deuxième sortie , les moyens d'ajustement étant configurés pour imposer à un rayonnement, se propageant selon le deuxième trajet, une deuxième taille de mode égale à la première taille de mode.

Selon un mode de mise en œuvre, les moyens d'ajustement comprennent une lame d'une épaisseur Te, et ladite lame étant faite d'un matériau d'indice optique Ne, l'épaisseur Te et l'indice optique Te étant ajustés pour que la deuxième taille de mode soit égale à la première taille de mode.

Selon un mode de mise en œuvre, l'isolateur optique présente un indice optique Ni et une épaisseur Ti, et est combiné avec un premier matériau d'indice optique Noi et d'épaisseur cumulée Toi s'interposant sur le premier trajet, la lame est combinée avec un deuxième matériau d'indice optique Noe et d'épaisseur cumulée Toe s'interposant sur le deuxième trajet, l'indice optique Ni, l'épaisseur Ti, l'indice optique Noi, l'épaisseur cumulée Toi, l'indice optique Noe, l'épaisseur cumulée Toe, l'indice optique Ne et l'épaisseur Te respectant la relation suivante :

$$\frac{Te}{Ne} + \frac{Toe}{Noe} = \frac{Ti}{Ni} + \frac{Toi}{Noi}$$

Selon un mode de mise en œuvre, l'assemblage photonique est pourvu de moyens d'alignement actif qui comprennent une première entrée d'alignement, une première sortie d'alignement, une deuxième entrée d'alignement et une deuxième sortie d'alignement choisies parmi, respectivement, l'au moins une première entrée, l'au moins une première sortie, l'au moins une deuxième entrée et l'au moins une deuxième sortie , la première sortie d'alignement et la deuxième entrée d'alignement sont optiquement couplées et définissent selon cet ordre un premier trajet d'alignement, la deuxième sortie d'alignement et la première entrée d'alignement sont optiquement couplées et définissent selon cet ordre un deuxième trajet d'alignement.

Selon un mode de mise en œuvre, les moyens d'alignement actif sont agencés de sorte qu'un rayonnement lumineux entrant dans le composant photonique par la première entrée d'alignement en ressorte par la première sortie d'alignement ou de sorte qu'un rayonnement lumineux entrant dans l'élément photonique par la deuxième entrée d'alignement en ressorte par la deuxième sortie d'alignement.

Selon un mode de mise en œuvre, les moyens d'alignement actif comprennent un laser d'alignement et un photo détecteur agencés selon un premier agencement ou un deuxième agencement, le premier agencement permet à un rayonnement émis par le laser d'alignement, avant d'atteindre le photo détecteur, d'emprunter dans l'ordre le premier trajet d'alignement et le deuxième trajet d'alignement, tandis que le deuxième agencement permet à un rayonnement émis par le laser d'alignement, avant d'atteindre le photo détecteur, d'emprunter dans l'ordre le deuxième trajet d'alignement et le premier trajet d'alignement.

Selon un mode de mise en œuvre, la première face et la deuxième face sont en regard l'une de l'autre, l'isolateur optique et les moyens d'ajustement de faisceau s'intercalant, respectivement, entre l'au moins une première sortie et l'au moins une deuxième entrée d'une part, et entre l'au moins une première entrée et l'au moins une deuxième sortie d'autre part.

Selon un mode de mise en œuvre, l'au moins un guide de sortie se termine selon une de ces extrémités par l'au moins une première sortie et l'au moins un guide d'entrée se termine selon une de ces extrémités par l'au moins une première entrée.

Selon un mode de mise en œuvre, l'au moins un guide de sortie et au moins un guide d'entrée s'étendent dans un plan parallèle à la première face.

Selon un mode de mise en œuvre, l'au moins un guide de sortie se termine selon une de ses extrémités par un réseau de diffraction en correspondance avec l'au moins une première sortie, et l'au moins un guide d'entrée se termine selon une de ses extrémités par un autre réseau de diffraction en correspondance avec l'au moins une première entrée.

Selon un mode de mise en œuvre, ledit assemblage photonique comprend un prisme disposé sur le premier trajet et le deuxième trajet.

Selon un mode de mise en œuvre, le dispositif photonique comprend au moins un laser coopérant avec l'au moins un guide de sortie.

Selon un mode de mise en œuvre, l'élément photonique comprend un réseau de fibres optiques reposant dans des gorges d'un deuxième bloc portant la deuxième face, avantageusement, les fibres optiques comprennent une extrémité en affleurement avec la deuxième face.

Selon un mode de mise en œuvre, le dispositif photonique comprend des lentilles reposant sur la première face et coopérant avec l'au moins une première entrée et l'au moins une première sortie.

L'invention concerne également un procédé de formation d'un assemblage photonique qui comprend les étapes suivantes :

-   une étape de fourniture d'un dispositif photonique comprenant un premier bloc pourvu d'au moins un guide de sortie et d'au moins un guide d'entrée coopérant avec, respectivement, au moins une première sortie et au moins une première entrée disposées sur une première face du premier bloc ;
-   une étape de fourniture d'un élément photonique pourvu d'au moins une deuxième sortie et d'au moins une deuxième entrée, disposées sur une deuxième face de l'élément photonique ;
-   une étape consistant à disposer un isolateur optique s'interposant sur le trajet de propagation lumineuse, dit premier trajet, entre l'au moins une première sortie et l'au moins une deuxième entrée, et imposant à un rayonnement, se propageant selon le premier trajet, une première taille de mode ;
-   une étape consistant à disposer des moyens d'ajustement s'interposant sur le trajet de propagation lumineuse, dit deuxième trajet, entre l'au moins une première entrée et l'au moins une deuxième sortie, les moyens d'ajustement étant configurés pour imposer à un rayonnement, se propageant selon le deuxième trajet, une deuxième taille de mode égale à la première taille de mode ;

le procédé comprenant en outre une étape de couplage optique destinée à coupler optiquement l'au moins une deuxième sortie et l'au moins une deuxième entrée avec, respectivement, l'au moins une première entrée et l'au moins une première sortie.

Selon un mode de mise en œuvre, les moyens d'ajustement comprennent une lame d'une épaisseur Te, et ladite lame étant faite d'un matériau d'indice optique Ne, l'épaisseur Te et l'indice optique Te étant ajustés pour que la deuxième taille de mode soit égale à la première taille de mode.

Selon un mode de mise en œuvre, l'isolateur optique présente un indice optique Ni et une épaisseur Ti, et est combiné avec un premier matériau d'indice optique Noi et d'épaisseur cumulée Toi s'interposant sur le premier trajet, la lame est combinée avec un deuxième matériau d'indice optique Noe et d'épaisseur cumulée Toe s'interposant sur le deuxième trajet, l'indice optique Ni, l'épaisseur Ti, l'indice optique Noi, l'épaisseur cumulée Toi, l'indice optique Noe, l'épaisseur cumulée Toe, l'indice optique Ne et l'épaisseur Te respectant la relation suivante :

$$\frac{Te}{Ne} + \frac{Toe}{Noe} = \frac{Ti}{Ni} + \frac{Toi}{Noi}$$

Selon un mode de mise en œuvre, l'étape de couplage optique met en œuvre des moyens d'alignement actif, les moyens d'alignement actif comprennent une première entrée d'alignement, une première sortie d'alignement, une deuxième entrée d'alignement et une deuxième sortie d'alignement choisies parmi, respectivement, l'au moins une première entrée, l'au moins une première sortie, l'au moins une deuxième entrée et l'au moins une deuxième sortie, la première sortie d'alignement et la deuxième entrée d'alignement sont optiquement couplées et définissent selon cet ordre un premier trajet d'alignement, la deuxième sortie d'alignement et la première entrée d'alignement sont optiquement couplées et définissent selon cet ordre un deuxième trajet d'alignement, l'étape de couplage optique comprenant l'émission d'un rayonnement lumineux qui lorsqu'il emprunte l'un du premier ou du deuxième trajet d'alignement emprunte ensuite l'autre du premier ou du deuxième trajet d'alignement.

Selon un mode de mise en œuvre, les moyens d'alignement actif sont agencés de sorte qu'un rayonnement lumineux entrant dans le dispositif photonique par la première entrée d'alignement en ressorte par la première sortie d'alignement ou de sorte qu'un rayonnement lumineux entrant dans l'élément photonique par la deuxième entrée d'alignement en ressorte par la deuxième sortie d'alignement.

Selon un mode de mise en œuvre, l'étape de couplage optique comprend l'émission d'un rayonnement lumineux par un laser d'alignement et la détection dudit rayonnement par un photo détecteur, le laser d'alignement et le photo détecteur étant agencés selon un premier agencement ou un deuxième agencement, le premier agencement permet à un rayonnement émis par le laser d'alignement, avant d'atteindre le photo détecteur, d'emprunter dans l'ordre le premier trajet d'alignement et le deuxième trajet d'alignement, tandis que le deuxième agencement permet à un rayonnement émis par le laser d'alignement, avant d'atteindre le photo détecteur, d'emprunter dans l'ordre le deuxième trajet d'alignement et le premier trajet d'alignement.

**BREVE DESCRIPTION DES DESSINS**

D'autres caractéristiques et avantages de l'invention ressortiront de la description détaillée qui va suivre en référence aux figures annexées sur lesquelles :

[Fig.1] La figure 1 est une représentation schématique d'un dispositif photonique, selon un plan de coupe dudit dispositif, connu de l'état de la technique, et illustrant un mode de couplage optique par 1a surface avec un élément photonique non représenté;

[Fig.2] La figure 2 est une représentation schématique d'un autre dispositif photonique, selon un plan de coupe dudit dispositif, connu de l'état de la technique, et illustrant un mode de couplage optique par la surface avec un autre élément photonique;

[Fig.3] La figure 3 est une représentation schématique d'un autre dispositif photonique, selon un plan de coupe dudit dispositif, connu de l'état de la technique, et illustrant un mode de couplage par la tranche ;

[Fig.4] La figure 4 est illustre la mise en œuvre d'un isolateur optique pour le couplage entre le dispositif photonique et l'élément photonique représentés à la figure 3 ;

[Fig.5] La figure 5 est une représentation schématique d'un assemblage d'un premier composant photonique et d'un deuxième composant photonique optiquement couplés entre eux ;

[Fig.6] La figure 6 est une représentation schématique d'un assemblage photonique selon un premier mode de réalisation de la présente invention, notamment l'assemblage photonique est représenté selon un plan de coupe perpendiculaire à la première et à la deuxième face, et qui comprend l'ensemble des guides du dispositif photonique et de l'élément photonique ;

[Fig.7] La figure 7 est une représentation schématique du dispositif photonique de la figure 6 et représenté selon les mêmes modalités de la figure 6 ;

[Fig.8] La figure 8 est une représentation schématique de l'élément photonique de la figure 6 et représenté selon les mêmes modalités de la figure 6 ;

[Fig.9] La figure 9 est une représentation schématique d'un assemblage photonique de la figure 6 et auquel sont adjoints des moyens d'alignement actif selon une première variante du premier mode de réalisation de la présente invention ;

[Fig.10] La figure 10 est une représentation schématique du dispositif photonique de la figure 9 et représenté selon les mêmes modalités de la figure 9 ;

[Fig.11] La figure 11 est une représentation schématique de l'élément photonique de la figure 9 et représenté selon les mêmes modalités de la figure 9 ;

[Fig.12] La figure 12 est une représentation schématique d'un assemblage photonique de la figure 6 et auquel sont adjoints des moyens d'alignement actif selon une deuxième variante du premier mode de réalisation de la présente invention ;

[Fig.13] La figure 13 est une représentation schématique du dispositif photonique de la figure 12 et représenté selon les mêmes modalités de la figure 12 ;

[Fig.14] La figure 14 est une représentation schématique de l'élément photonique de la figure 12 et représenté selon les mêmes modalité de la figure 12 ;

[Fig.15] La figure 15 une représentation schématique d'un dispositif photonique susceptible d'être mis en œuvre dans un deuxième mode de réalisation de la présente invention, notamment le dispositif photonique est représenté selon un plan de coupe parallèle à la première face et qui comprend les guides d'ondes dudit dispositif photonique ;

[Fig.16] La figure 16 est une représentation d'un assemblage photonique selon le deuxième mode de réalisation de la présente invention, notamment l'assemblage photonique est représenté selon un plan de couple perpendiculaire à la première face et qui comprend un guide de sortie ;

[Fig.17] La figure 17 est une représentation d'un assemblage photonique selon le deuxième mode de réalisation de la présente invention, notamment l'assemblage photonique est représenté selon un plan de couple perpendiculaire à la première face et qui comprend un guide d'entrée.

## DESCRIPTION DETAILLEE DE L'INVENTION

L'invention concerne un assemblage photonique pourvu d'un dispositif photonique et d'un élément photonique optiquement couplés entre eux.

En particulier, le dispositif photonique comprend un premier bloc pourvu d'au moins un guide de sortie et d'au moins un guide d'entrée coopérant avec, respectivement, au moins une première sortie et au moins une première entrée disposées sur une première face du bloc.

L'élément photonique est pourvu d'au moins une deuxième sortie et d'au moins une deuxième entrée, disposées sur une deuxième face de l'élément photonique. A cet égard, l'au moins une deuxième sortie et l'au moins une deuxième entrée sont optiquement couplées avec, respectivement, l'au moins une première entrée et l'au moins une première sortie.

L'assemblage photonique comprend également un isolateur optique s'interposant sur le trajet de propagation lumineuse, dit premier trajet, entre l'au moins une première sortie et l'au moins une deuxième entrée. Par ailleurs, l'isolateur optique impose à un rayonnement, se propageant selon le premier trajet, une première taille de mode (« Waist » selon la terminologie anglo-Saxonne).

L'assemblage photonique comprend enfin des moyens d'ajustement s'interposant sur le trajet de propagation lumineuse, dit deuxième trajet, entre l'au moins une première entrée et l'au moins une deuxième sortie. A cet égard, les moyens d'ajustement sont configurés pour imposer à un rayonnement, se propageant selon le deuxième trajet, une deuxième taille de mode égale à la première taille de mode.

Par « optiquement couplé », on entend une entrée et une sortie agencées de sorte qu'un rayonnement lumineux issue de la sortie est injecté dans l'entrée. Il est entendu, selon les termes de la présent invention qu'une entrée est une entrée optique, et une sortie est une sortie otique. En d'autres termes, un rayonnement lumineux incident sur une entrée optique sera injecté dans le composant (dispositif ou élément) considéré. De manière équivalente, un rayonnement lumineux pourra être extrait par une sortie optique du composant (dispositif ou élément) considéré.

Selon la présente invention, un guide est un guide d'onde. Par ailleurs, dès lors qu'un guide coopère avec une sortie au sein d'un dispositif photonique, un rayonnement guidé par ledit guide est susceptible d'être extrait du dispositif photonique par la sortie. De manière équivalente, dès lors qu'un guide coopère avec une entrée, au sein d'un dispositif photonique, un rayonnement injecté dans le dispositif photonique par l'entrée sera guidé par ledit guide.

Tel que décrit dans la suite de l'énoncé, la coopération entre un guide et une sortie ou une entrée peut être réduite à la simple identification d'une extrémité du guide à l'entrée ou la sortie. De manière alternative, cette coopération entre un guide et une entrée ou une sortie peut faire intervenir un réseau de diffraction.

Ainsi, la figure 6 représente un assemblage photonique 100 selon un premier mode de réalisation de la présente invention et associé à un couplage par la tranche. Notamment, l'assemblage photonique 100 comprend un dispositif photonique 200a et un élément photonique 200b.

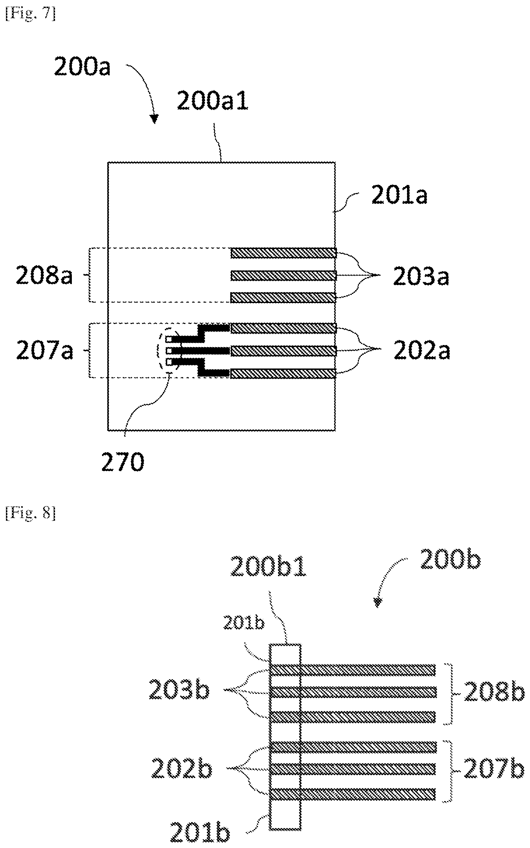

Le dispositif photonique 200a comprend à cet égard un premier bloc 200a1. Tel qu'illustré à la figure 7, le premier bloc 200a1 comprend une face dite première face 201a sur laquelle sont formées ou disposées au moins une première sortie 202a et au moins une première entrée 203a.

Le dispositif photonique peut également comprendre des lentilles 210 reposant sur la première face 201a et coopérant avec l'au moins une première entrée 203a et l'au moins une première sortie 202a. Plus particulièrement, chaque première sortie 202a est associée à une lentille qui lui est propre, de sorte qu'un rayonnement lumineux extrait par ladite première sortie traverse la lentille considérée. De manière équivalente, chaque première entrée 203a est associée à une lentille qui lui est propre, de sorte qu'un rayonnement lumineux, avant d'être injecté par ladite première entrée, traverse la lentille considérée.

Le premier bloc 200a1 comprend également des guides d'onde, et plus particulièrement au moins un guide de sortie 207a et au moins un guide d'entrée 208a. Notamment, l'au moins un guide de sortie 207a coopère avec l'au moins une première sortie 202a, tandis que l'au moins un guide d'entrée 208a coopère avec l'au moins une première entrée 208a.

Ainsi, un rayonnement lumineux guidé par l'au moins un guide de sortie 207a peut être extrait, du premier bloc 200a1, par l'au moins une première sortie 202a avec laquelle il coopère. De manière équivalente, un rayonnement lumineux injecté dans le premier bloc 200a1 par l'au moins une première entrée 208a sera guidé par l'au moins un guide d'entrée 208a.

Le rayonnement lumineux susceptible d'être guidé par l'au moins un guide de sortie 207a provient d'une ou plusieurs sources lumineuses par exemple un ou plusieurs lasers, voire une matrice de lasers.

L'une ou plusieurs sources lumineuses peuvent être intégrées au dispositif photonique 200a, voire au premier bloc 200a1, ou tout simplement être externe audit dispositif photonique 200a.

A titre d'exemple, le dispositif photonique 200a de la figure 6 comprend trois guides de sortie 202a, et une matrice de lasers 270 intégrée au premier bloc 200a1. Notamment chaque laser 270 est associé spécifiquement à un guide de sortie 202a de sorte qu'un rayonnement lumineux émis par le laser considéré soit guidé par le guide de sortie avec lequel il est associé. L'invention n'est toutefois pas limitée à ce seul agencement, et l'homme du métier pourra envisager tout autre configuration en termes d'intégration et de nombre de lasers.

Il est notable qu'un rayonnement émis par une source laser est polarisée selon une direction privilégiée. Ainsi, et sans qu'il soit nécessaire de le préciser, le dispositif photonique 200a est configuré pour permettre la propagation et/ou le guidage d'un rayonnement lumineux (Laser) polarisé selon une direction prédéterminée.

Selon ce premier mode de réalisation, l'au moins un guide de sortie 207a se termine selon une de ces extrémités par l'au moins une première sortie 202a, tandis que l'au moins un guide d'entrée 208a se termine selon une de ces extrémités par l'au moins une première entrée 203a. En d'autres termes, l'extrémité de l'au moins un guide de sortie 207a formant l'au moins une première sortie 202a est en affleurement de la première face 201a. De manière équivalente, l'extrémité de l'au moins un guide d'entrée 208a formant l'au moins une première entrée 203a est en affleurement de la première face 201a.

Selon la présente invention, les guides d'onde du premier bloc 200a1 peuvent comprendre du nitrure de silicium ou du silicium noyé dans une matrice d'oxyde de silicium.

L'assemblage photonique 100 comprend également un élément photonique 200b (figure 6 et figure 8). L'élément photonique 200b, à l'instar du premier bloc 200a1, comprend une deuxième face 201b sur laquelle sont formées au moins une deuxième sortie 203b et au moins une deuxième entrée 202b. Selon la présente invention, l'élément photonique 200b et le dispositif photonique 200a sont agencés de sorte que l'au moins une deuxième sortie 203b et l'au moins une deuxième entrée 202b sont optiquement couplées avec, respectivement, l'au moins une première entrée 203a et l'au moins une première sortie 202a.

Ainsi, un rayonnement lumineux extrait du dispositif photonique 200a par l'au moins une première sortie 202a sera injecté dans l'élément photonique 200b par l'au moins une deuxième entrée 202b. De manière équivalente, un rayonnement lumineux extrait de l'élément photonique 200b par l'au moins une deuxième sortie 203b sera injecté dans le dispositif photonique 200a par l'au moins une première entrée 203a.

A cette fin, et selon le premier mode de réalisation, la première face 201a et la deuxième face 201b sont en regard l'une de l'autre. Plus particulièrement, la première face 201a et la deuxième face 201b sont espacées d'une distance D.

L'élément photonique 200b selon la présente invention peut comprendre un réseau de fibres optiques, et plus particulièrement au moins une fibre d'entrée 207b et au moins une fibre de sortie 208b. Notamment, l'au moins une fibre d'entrée 207b coopère avec l'au moins une deuxième entrée 202b (figure 8). De manière équivalente, l'au moins une fibre de sortie 208b coopère avec l'au moins une deuxième sortie 203b.

Par exemple, l'au moins une fibre d'entrée 207b se termine selon une de ses extrémités par l'au moins une deuxième entrée 202b, tandis que l'au moins une fibre de sortie 208b se termine selon une de ses extrémités par l'au moins une deuxième sortie 203b. En d'autres termes, l'extrémité de l'au moins une fibre d'entrée 207b formant l'au moins une deuxième entrée 202b et l'extrémité de l'au moins une fibre de sortie 208b formant l'au moins une deuxième sortie 203b sont en affleurement de la deuxième face 201b. Selon cette configuration, la deuxième face peut être portée par un deuxième bloc 200b1 pourvu de gorges (« V-groove » selon la terminologie Anglo-Saxonne), et dans lesquelles sont montées les fibres optiques.

L'assemblage photonique 100 comprend également un isolateur optique 250 s'interposant sur le trajet de propagation lumineuse, dit premier trajet, entre l'au moins une première sortie 202a et l'au moins une deuxième entrée 202b. Il est toutefois clair, sans qu'il soit nécessaire de le préciser, que l'isolateur optique 250 ne s'interpose pas entre l'au moins une deuxième sortie 203b et l'au moins une première entrée 203a. L'isolateur optique 250 présente notamment un indice optique Ni, et une épaisseur Ti mesurée selon la direction définie par le premier trajet.

L'isolateur optique peut par exemple être collé sur l'une ou l'autre de la première et de la deuxième face. Selon ce premier mode de réalisation, l'isolateur optique est collé sur la deuxième face.

L'isolateur optique 250 peut être combiné avec un premier matériau d'indice Noi et d'épaisseur cumulée Toi s'interposant sur le premier trajet. En d'autres termes, un rayonnement empruntant 1e premier trajet traversera l'isolateur optique 250 et une épaisseur Toi du premier matériau. Par exemple, le premier matériau peut combler l'espace laissé vacant entre l'isolateur optique 250 et la première et/ou la deuxième face. Le premier matériau peut comprendre de l'air, ou un matériau diélectrique.

Le « premier trajet » définit un sens de propagation du rayonnement lumineux de l'au moins une première sortie 202a vers l'au moins une deuxième entrée 202b.

Un isolateur optique 250 selon les termes de la présente invention est un composant optique permettant la propagation de la lumière en sens unique. Un tel composant peut notamment comprendre un rotateur de Faraday intercalé entre un premier polariseur et un deuxième polariseur dont l'axe optique est décalé de 45° par rapport à celui du polariseur.

Ainsi, seule une composante, dite composante utile d'un rayonnement, orientée selon l'axe optique du premier polariseur est transmise par ce dernier au rotateur de Faraday. Lorsqu'elle traverse le rotateur de Faraday, la polarisation de la composante utile se voit imposer une rotation de 45° avant d'atteindre le deuxième polariseur. La composante utile, présentant une polarisation parallèle à l'axe optique du polariseur, est alors transmise par ce dernier pour former le rayonnement de sortie. Il est donc entendu qu'un rayonnement d'entrée présentant une polarisation perpendiculaire à l'axe optique du polariseur ne sera pas transmise par l'isolateur optique. Il est aussi entendu qu'un rayonnement incident sur le deuxième polariseur, quelle que soit sa polarisation, ne sera pas transmis par l'isolateur optique. Ce dernier aspect, bien connu de l'homme du métier, trouve son origine dans le caractère non réciproque du rotateur de Faraday.

L'isolateur optique 250 est ainsi agencé pour permettre la propagation d'un rayonnement lumineux de l'au moins une première sortie 202a vers l'au moins une deuxième entrée 202b selon le premier trajet. La mise en œuvre de l'isolateur optique 250 permet d'éliminer les réflexions parasites qu'un rayonnement lumineux est susceptible de subir sur le premier trajet. L'élimination des réflexions parasites prévient tout retour du rayonnement lumineux au niveau du ou des lasers, et permet ainsi de limiter la dégradation de leurs performances.

La mise en œuvre de l'isolateur optique 250 impose à un rayonnement lumineux, se propageant selon le premier trajet, une première taille de mode (« Waist » selon la terminologie Anglo-Saxonne). Aussi, à cette afin la distance D entre la première face 201a et la deuxième face 201b est généralement ajustée de manière à rendre compte de ce phénomène et ainsi d'optimiser le couplage optique entre l'au moins une première sortie 202a et l'au moins une deuxième entrée 202b.

Cet ajustement n'est toutefois pas sans conséquences sur l'efficacité ou l'optimisation du couplage entre l'au moins une deuxième sortie 203b et l'au moins une première entrée 202a. Notamment, et sans autres précautions, un rayonnement lumineux se propageant, selon un deuxième trajet, de l'au moins une deuxième sortie 203b vers l'au moins une première entrée 203a ne se verra pas imposé la première taille de mode.

Ainsi, afin de pallier ce problème, il est proposé de mettre en œuvre des moyens d'ajustement 260 s'interposant sur le trajet de propagation lumineuse, entre l'au moins une première entrée 203a et l'au moins une deuxième sortie 203b. Les moyens d'ajustement 260 sont notamment configurés pour imposer à un rayonnement, se propageant selon le deuxième trajet, une deuxième taille de mode sensiblement égale à la première taille de mode. Il est clair, sans qu'il soit nécessaire de le préciser, que les moyens d'ajustement 260 ne s'interposent pas entre l'au moins une première sortie 202a et l'au moins une deuxième entrée 202b.

La mise en œuvre d'un deuxième isolateur optique en tant que moyens d'ajustement et orienté pour laisser passer un rayonnement lumineux de l'au moins une deuxième sortie vers l'au moins première entrée n'est pas souhaitable. En effet, la polarisation d'un rayonnement guidé par une fibre de l'élément photonique n'est pas connue de sorte que ledit rayonnement pourrait être partiellement transmis, voire bloqué, si un isolateur optique devait être mis en œuvre en tant que moyens d'ajustement. La simple mise en œuvre d'un deuxième isolateur optique viendrait bloquer tout ou partie du signal.

A titre d'exemple, les moyens d'ajustement 260 peuvent comprendre une lame d'une épaisseur Te, et ladite lame étant faite d'un matériau d'indice optique Ne. L'épaisseur Te et l'indice optique Te étant ajustés pour que la deuxième taille de mode soit sensiblement égale à la première taille de mode (Il est entendu que l'épaisseur Te est mesurée selon une direction définie par les faces de la lame parallèles à la première et le deuxième face).

La lame peut par exemple être collée sur l'une ou l'autre de la première et de la deuxième face. Selon ce premier mode de réalisation, la lame est collée sur la deuxième face.

L'ajustement peut comprendre notamment la considération d'un indice optique Ne, avantageusement, supérieur à l'indice optique Ni. Cette configuration est particulièrement avantageuse dans la mesure où elle permet d'espacer (augmenter la distance « D ») la première face et la deuxième face, et par voie de conséquence facilite 1e procédé d'assemblage du dispositif photonique et de l'élément photonique.

De manière alternative ou complémentaire, la lame 260 peut être combinée avec un deuxième matériau d'indice Noe et d'épaisseur cumulée Toe s'interposant sur le deuxième trajet. En d'autres termes, un rayonnement empruntant le deuxième trajet traversera la lame 260 et une épaisseur Toe du deuxième matériau. Par exemple, le deuxième matériau peut combler l'espace laissé vacant entre la lame 260 et la première et/ou la deuxième face. Le deuxième matériau peut comprendre de l'air ou un matériau diélectrique.

Selon cette alternative, l'ajustement peut être exécuté en imposant aux grandeurs Te, Ne, Toe, Noe, Ti, Ni, Toi et Noi de respecter la relation suivante :

$$\frac{Te}{Ne} + \frac{Toe}{Noe} \approx \frac{Ti}{Ni} + \frac{Toi}{Noi}$$

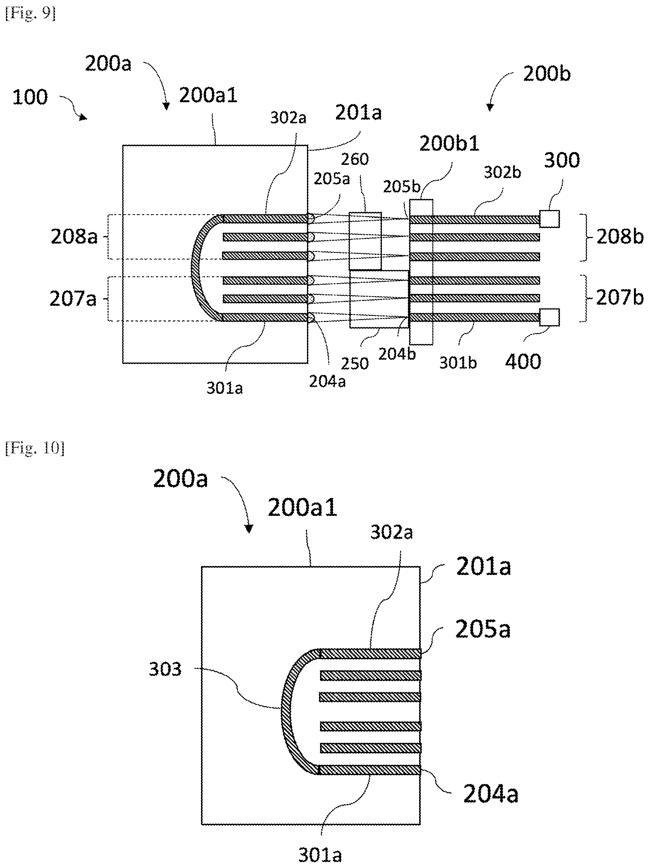

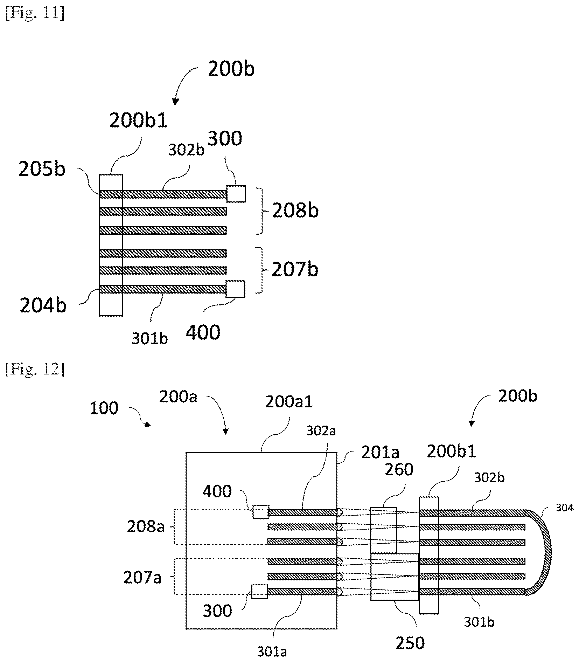

Selon une première variante de ce premier mode de réalisation illustrée à la figure 9, à la figure 10 et à la figure 11, l'assemblage photonique 100 est pourvu de moyens d'alignement actif. Par « moyens d'alignement actif », on entend des moyens configurés pour optimiser le couplage optique entre l'au moyen une première sortie 202a et l'au moins une deuxième entrée

202b d'une part, et entre l'au moins une deuxième sortie 203b et l'au moins une première entrée 203a d'autre part.

En particulier, les moyens d'alignement actif comprennent une première entrée d'alignement 205a, une première sortie d'alignement 204a, une deuxième entrée d'alignement 204b et une deuxième sortie d'alignement 205b choisies parmi, respectivement, l'au moins une première entrée 203a, l'au moins une première sortie 202a, l'au moins une deuxième entrée 202b et l'au moins une deuxième sortie 203b. En particulier, la première sortie d'alignement 204a et la deuxième entrée d'alignement 204b sont optiquement couplées et définissent selon cet ordre un premier trajet d'alignement, la deuxième sortie d'alignement 205b et la première entrée d'alignement 205a sont optiquement couplées et définissent selon cet ordre un deuxième trajet d'alignement.

Selon cette première variante, les moyens d'alignement actif sont agencés de sorte qu'un rayonnement lumineux entrant dans le dispositif photonique 200a par la première entrée d'alignement 205a en ressorte par la première sortie d'alignement 204a.

A cette fin, les moyens d'alignement actif peuvent également comprendre un guide de sortie d'alignement 301a et un guide d'entrée d'alignement 302a choisis parmi, respectivement, l'au moins un guide de sortie 207a et l'au moins un guide d'entrée 208a. En particulier, le guide de sortie d'alignement 301a et le guide d'entrée d'alignement 302a comprennent chacun une extrémité en affleurement de la première face 201a et formant, respectivement, la première sortie d'alignement 204a et la première entrée d'alignement 205a. Par ailleurs, le guide de sortie d'alignement 301a et le guide d'entrée d'alignement 302a sont optiquement liés entre eux par l'autre de leurs extrémités, notamment au moyen d'un guide d'onde, dit guide d'onde de liaison 303.

Les moyens d'alignement actif peuvent comprendre une fibre d'entrée d'alignement 301b et une fibre de sortie d'alignement 302b choisies parmi, respectivement, l'au moins une fibre d'entrée 207b et l'au moins une fibre de sortie 208b.

Les moyens d'alignement actif peuvent également comprendre un laser d'alignement 300 et un photo détecteur 400. Notamment, le laser d'alignement 300 peut être agencé pour injecter un rayonnement lumineux à une extrémité de la fibre de sortie d'alignement 302b opposée à la deuxième sortie d'alignement 205b.

De manière équivalente, le photo détecteur 400 peut être agencé pour détecter un rayonnement lumineux guidé par la fibre d'entrée d'alignement 302b à une extrémité, dite extrémité de détection, opposée la deuxième entrée d'alignement 204b.

Ainsi, un rayonnement lumineux émis par le laser d'alignement 300 sera transmis, à partir de la deuxième sortie d'alignement 205b, au dispositif photonique 200a par sa première entrée d'alignement 205a pour en ressortir par la première sortie d'alignement 204a. Le rayonnement lumineux sera ensuite retransmis à l'élément photonique par la deuxième entrée d'alignement 204b pour être détecté à l'extrémité de détection par le photo détecteur 400.

Cet agencement est particulièrement avantageux dès lors qu'il s'agit d'aligner optiquement avec précision le dispositif photonique et l'élément photonique. Notamment, l'alignement optique peut comprendre une optimisation et plus particulièrement une maximisation de l'intensité du rayonnement lumineux détecté par le photo détecteur 400.

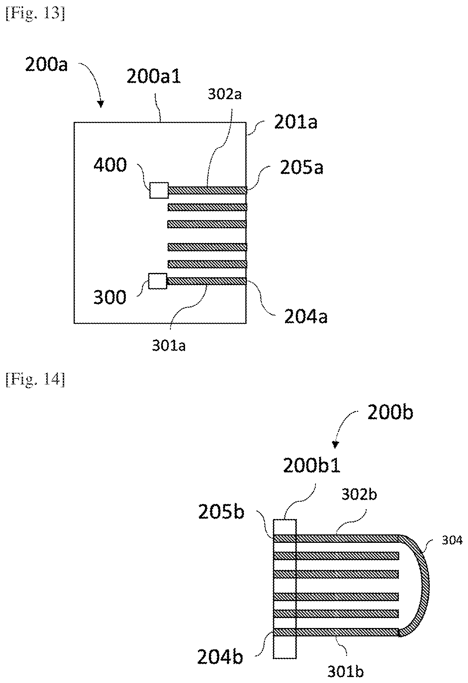

La figure 12, la figure 13 et la figure 14 illustrent une deuxième variante de mise en œuvre des moyens d'alignement actif. Cette deuxième variante reprend pour l'essentiel les caractéristiques relatives à la première variante. Toutefois, la deuxième variante diffère de la première variante en ce que les moyens d'alignement actif sont agencés de sorte qu'un rayonnement lumineux entrant dans le composant photonique 200a par la deuxième entrée d'alignement 204b en ressorte par la deuxième sortie d'alignement 205b, et est dépourvu du guide d'onde de liaison 303. Également, selon cette deuxième variante, le laser d'alignement 300 et le photo détecteur 400 sont agencés pour coopérer avec, respectivement, le guide de sortie d'alignement 301a et le guide d'entrée d'alignement 302a. Notamment, le laser d'alignement 300 peut être agencé pour injecter un rayonnement lumineux à une extrémité du guide de sortie d'alignement 301a opposée à la première sortie d'alignement 204a. Également, le photo détecteur 400 peut être agencé pour détecter un rayonnement lumineux guidé par le guide d'entrée d'alignement 302a à une extrémité, dite extrémité de détection, opposée la première entrée d'alignement 205a.

Enfin, selon cette deuxième variante, la fibre d'entrée d'alignement 301b et la fibre de sortie d'alignement 302b sont optiquement liées entre elles par une de leur extrémité, opposées respectivement à la deuxième entrée d'alignement et la deuxième sortie d'alignement. A cette fin Ce lien optique met notamment en œuvre une fibre optique, dite fibre optique de liaison 304.

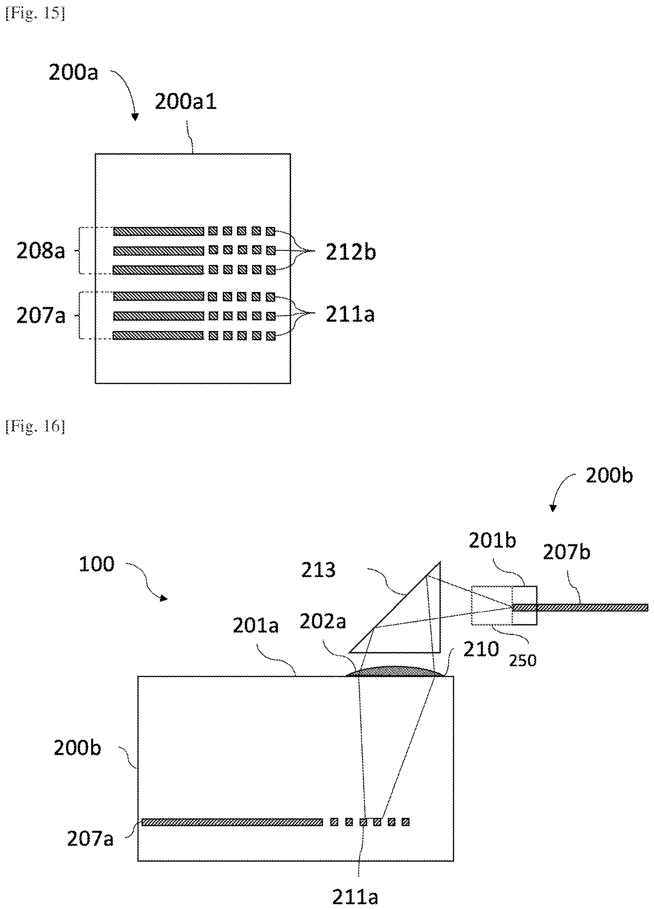

L'invention concerne également un deuxième mode de réalisation qui reprend pour l'essentiel les éléments relatifs au premier mode de réalisation. Selon ce deuxième mode de réalisation le couplage optique entre le dispositif photonique et l'élément photonique est toutefois exécuté par la surface (figure 15, figure 16 et figure 17).

Ainsi, et contrairement à l'agencement proposé dans le cadre du premier mode de réalisation, l'au moins une première sortie 202a et l'au moins une première entrée 203a ne forment pas les extrémités, respectivement, de l'au moins un guide de sortie 207a et de l'au moins un guide d'entrée 208a.

Selon le deuxième mode de réalisation, l'au moins un guide de sorite 207a et l'au moins un guide d'entrée 208a s'étendent selon un plan parallèle à la première face 201a. Le dispositif photonique 200a comprend également des réseaux de diffraction, et plus particulièrement au moins un réseau de sortie 211a et au moins un réseau d'entrée 212a dans le prolongement, respectivement, de l'au moins un guide de sortie 207a et de l'au moins un guide d'entrée 208a.

Plus particulièrement, l'au moins un réseau de sortie 211a est en correspondance avec l'au moins une première sortie 202a. Ainsi, un rayonnement guidé par l'au moins un guide de sortie 207a sera projeté en direction de l'au moins une première sortie 202a en vue de son extraction par ladite au moins une première sortie 202a (figure 16).

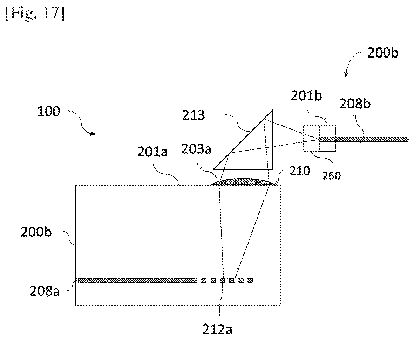

De manière équivalente, l'au moins un réseau d'entrée 212a est en correspondance avec l'au moins une première entrée 203a. Ainsi, un rayonnement injecté par l'au moins une première entrée 203a sera projetée sur l'au moins un réseau d'entrée 212a pour ensuite être guidé par l'au moins un guide d'entrée 208a (figure 17).

A l'instar du premier mode de réalisation, l'assemblage photonique 100 selon le deuxième mode de réalisation peut comprendre des lentilles 210. Les lentilles reposent sur la première face 201a et coopèrent avec l'au moins une première entrée 203a (figure 17) et l'au moins une première sortie 202a (figure 16). Par particulièrement, chaque première sortie 202a est associée à une lentille qui lui est propre, de sorte qu'un rayonnement lumineux extrait par ladite première sortie traverse la lentille considérée. De manière équivalente, chaque première entrée 203a est associée à une lentille qui lui est propre, de sorte qu'un rayonnement lumineux, avant d'être injecté par ladite première entrée, traverse la lentille considérée.

L'assemblage photonique 100 peut également comprendre un prisme 213 disposé sur le premier trajet et le deuxième trajet destiné à permettre le couplage optique entre l'au moins première sortie avec l'au moins une deuxième entrée d'une part, et entre l'au moins une deuxième sortie avec l'au moins une première entrée d'autre part.

La mise en œuvre de la lame au sein de l'assemblage photonique selon les termes de la présente invention permet ainsi d'optimiser le couplage entre l'au moins une deuxième sortie et l'au moins une première entrée lorsqu'un isolateur optique s'interpose sur le premier trajet.

Bien sûr, l'invention n'est pas limitée aux modes de réalisation décrits et on peut y apporter des variantes de réalisation sans sortir du cadre de l'invention tel que défini par les revendications.

## Revendications

**1.** Assemblage photonique (100) qui comprend :

- un dispositif photonique (200a) comprenant un premier bloc (200a1) pourvu d'au moins un guide de sortie (207a) et d'au moins un guide d'entrée (208a) coopérant avec, respectivement, au moins une première sortie (202a) et au moins une première entrée (203a) disposées sur une première face (201a) du premier bloc (200a1) ;
- un élément photonique (200b) pourvu d'au moins une deuxième sortie (203b) et d'au moins une deuxième entrée (202b), disposées sur une deuxième face (201b) de l'élément photonique, et optiquement couplées avec, respectivement, l'au moins une première entrée (203a) et l'au moins une première sortie (202a) ;
- un isolateur optique (250) s'interposant sur le trajet de propagation lumineuse, dit premier trajet, entre l'au moins une première sortie (202a) et l'au moins une deuxième entrée (202b), et imposant à un rayonnement, se propageant selon le premier trajet, une première taille de mode ;
- des moyens d'ajustement (260) s'interposant sur le trajet de propagation lumineuse, dit deuxième trajet, entre l'au moins une première entrée (203a) et l'au moins une deuxième sortie (203b), les moyens d'ajustement (260) étant configurés pour imposer à un rayonnement, se propageant selon le deuxième trajet, une deuxième taille de mode égale à la première taille de mode les moyens d'ajustement (260) comprennent une lame d'une épaisseur Te, et ladite lame étant faite d'un matériau d'indice optique Ne, l'épaisseur Te et l'indice optique Te étant ajustés pour que la deuxième taille de mode soit égale à la première taille de mode.

**2.** Assemblage photonique (100) selon la revendication 1, dans lequel l'isolateur optique (250) présente un indice optique Ni et une épaisseur Ti, et est combiné avec un premier matériau d'indice optique Noi et d'épaisseur cumulée Toi s'interposant sur le premier trajet, la lame est combinée avec un deuxième matériau d'indice optique Noe et d'épaisseur cumulée Toe s'interposant sur le deuxième trajet, l'indice optique Ni, l'épaisseur Ti, l'indice optique Noi, l'épaisseur cumulée Toi, l'indice optique Noe, l'épaisseur cumulée Toe, l'indice optique Ne et l'épaisseur Te respectant la relation suivante :

$$\frac{Te}{Ne} + \frac{Toe}{Noe} = \frac{Ti}{Ni} + \frac{Toi}{Noi}$$

**3.** Assemblage photonique (100) selon l'une des revendications 1 à 2, dans lequel l'assemblage photonique (100) est pourvu de moyens d'alignement actif qui comprennent une première entrée d'alignement (205a), une première sortie d'alignement (204a), une deuxième entrée d'alignement (204b) et une deuxième sortie d'alignement (205b) choisies parmi, respectivement, l'au moins une première entrée (203a), l'au moins une première sortie (202a), l'au moins une deuxième entrée (202b) et l'au moins une deuxième sortie (203b), la première sortie d'alignement (204a) et la deuxième entrée d'alignement (204b) sont optiquement couplées et définissent selon cet ordre un premier trajet d'alignement, la deuxième sortie d'alignement (205b) et la première entrée d'alignement (205a) sont optiquement couplées et définissent selon cet ordre un deuxième trajet d'alignement.

4. Assemblage photonique (100) selon la revendication 3, dans lequel les moyens d'alignement actif sont agencés de sorte qu'un rayonnement lumineux entrant dans le dispositif photonique (200a) par la première entrée d'alignement (205a) en ressorte par la première sortie d'alignement (204a) ou de sorte qu'un rayonnement lumineux entrant dans l'élément photonique (200b) par la deuxième entrée d'alignement (204b) en ressorte par la deuxième sortie d'alignement (205b).

5. Assemblage photonique (100) selon la revendication 4, dans lequel les moyens d'alignement actif comprennent un laser d'alignement (300) et un photo détecteur (400) agencés selon un premier agencement ou un deuxième agencement, le premier agencement permet à un rayonnement émis par le laser d'alignement (300), avant d'atteindre le photo détecteur (400), d'emprunter dans l'ordre le premier trajet d'alignement et le deuxième trajet d'alignement, tandis que le deuxième agencement permet à un rayonnement émis par le laser d'alignement (300), avant d'atteindre le photo détecteur (400), d'empreinter dans l'ordre le deuxième trajet d'alignement et le premier trajet d'alignement.

6. Assemblage photonique (100) selon l'une des revendications 1 à 5, dans lequel la première face (201a) et la deuxième face (201b) sont en regard l'une de l'autre, l'isolateur optique (250) et les moyens d'ajustement (260) de faisceau s'intercalant, respectivement, entre l'au moins une première sortie (202a) et l'au moins une deuxième entrée (202b) d'une part, et entre l'au moins une première entrée (203a) et l'au moins une deuxième sortie (203b) d'autre part.

7. Assemblage photonique (100) selon l'une des revendications 1 à 6, dans lequel l'au moins un guide de sortie (207a) se termine selon une de ces extrémités par l'au moins une première sortie (202a) et l'au moins un guide d'entrée (208a) se termine selon une de ces extrémités par l'au moins une première entrée (203a).

8. Assemblage photonique (100) selon l'une des revendications 1 à 5, dans lequel l'au moins un guide de sortie (207a) et au moins un guide d'entrée (208a) s'étendent dans un plan parallèle à la première face (201a).

9. Assemblage photonique (100) selon la revendication 8, dans lequel l'au moins un guide de sortie (207a) se termine selon une de ses extrémités par un réseau de diffraction en correspondance avec l'au moins une première sortie (202a), et l'au moins un guide d'entrée (208a) se termine selon une de ses extrémités par un autre réseau de diffraction en correspondance avec l'au moins une première entrée (203a).

10. Assemblage photonique (100) selon la revendication 8 ou 9, dans lequel ledit assemblage photonique (100) comprend un prisme disposé sur le premier trajet et le deuxième trajet.

11. Assemblage photonique (100) selon l'une des revendications 5 à 10, dans lequel le dispositif photonique (200a) comprend au moins un laser coopérant avec l'au moins un guide de sortie (207a).

12. Assemblage photonique (100) selon l'une des revendications 1 à 11, dans lequel l'élément photonique (200b) comprend un réseau de fibres optiques montées dans des gorges d'un deuxième bloc portant la deuxième face (201b), avantageusement, les fibres optiques comprennent une extrémité en affleurement avec la deuxième face.

13. Assemblage photonique (100) selon l'une des revendications 1 à 12, dans lequel le dispositif photonique comprend des lentilles reposant sur la première face et coopérant avec l'au moins une première entrée (203a) et l'au moins une première sortie (202a).

14. Procédé de formation d'un assemblage photonique (100) qui comprend les étapes suivantes :

- une étape de fourniture d'un dispositif photonique (200a) comprenant un premier bloc (200a1) pourvu d'au moins un guide de sortie (207a) et d'au moins un guide d'entrée (208a) coopérant avec, respectivement, au moins une première sortie (202a) et au moins une première entrée (203a) disposées sur une première face (201a) du premier bloc (200a) ;
- une étape de fourniture d'un élément photonique (200b) pourvu d'au moins une deuxième sortie (203b) et d'au moins une deuxième entrée (202b), disposées sur une deuxième face (201b) de l'élément photonique ;
- une étape consistant à disposer un isolateur optique (250) s'interposant sur le trajet de propagation lumineuse, dit premier trajet, entre l'au moins une première sortie (202a) et l'au moins une deuxième entrée (202b), et imposant à un rayonnement, se propageant selon le premier trajet, une première taille de mode ;

- une étape consistant à disposer des moyens d'ajustement (260) s'interposant sur le trajet de propagation lumineuse, dit deuxième trajet, entre l'au moins une première entrée (203a) et l'au moins une deuxième sortie (203b), les moyens d'ajustement (260) étant configurés pour imposer à un rayonnement, se propageant selon le deuxième trajet, une deuxième taille de mode égale à la première taille de mode ;

le procédé comprenant en outre une étape de couplage optique destinée à coupler optiquement l'au moins une deuxième sortie (203b) et l'au moins une deuxième entrée (202b) avec, respectivement, l'au moins une première entrée (203a) et l'au moins une première sortie (202a),les moyens d'ajustement (260) comprennent une lame d'une épaisseur Te, et ladite lame étant faite d'un matériau d'indice optique Ne, l'épaisseur Te et l'indice optique Te étant ajustés pour que la deuxième taille de mode soit égale à la première taille de mode.

15. Procédé selon la revendications 14, dans lequel l'isolateur optique (250) présente un indice optique Ni et une épaisseur Ti, et est combiné avec un premier matériau d'indice optique Noi et d'épaisseur cumulée Toi s'interposant sur le premier trajet, la lame est combinée avec un deuxième matériau d'indice optique Noe et d'épaisseur cumulée Toe s'interposant sur le deuxième trajet, l'indice optique Ni, l'épaisseur Ti, l'indice optique Noi, l'épaisseur cumulée Toi, l'indice optique Noe, l'épaisseur cumulée Toe, l'indice optique Ne et l'épaisseur Te respectant la relation suivante :

$$\frac{Te}{Ne} + \frac{Toe}{Noe} = \frac{Ti}{Ni} + \frac{Toi}{Noi}$$

16. Procédé selon l'une des revendications 14 à 15, dans lequel l'étape de couplage optique met en œuvre des moyens d'alignement actif, les moyens d'alignement actif comprennent une première entrée d'alignement (205a), une première sortie d'alignement (204a), une deuxième entrée d'alignement (204b) et une deuxième sortie d'alignement (205b) choisies parmi, respectivement, l'au moins une première entrée (203a), l'au moins une première sortie (202a), l'au moins une deuxième entrée (202b) et l'au moins une deuxième sortie (203b), la première sortie d'alignement (204a) et la deuxième entrée d'alignement (204b) sont optiquement couplées et définissent selon cet ordre un premier trajet d'alignement, la deuxième sortie d'alignement (205b) et la première entrée d'alignement (205a) sont optiquement couplées et définissent selon cet ordre un deuxième trajet d'alignement, l'étape de couplage optique comprenant l'émission d'un rayonnement lumineux qui lorsqu'il emprunte l'un du premier ou du deuxième trajet d'alignement emprunte ensuite l'autre du premier ou du deuxième trajet d'alignement.

17. Procédé selon la revendication 16, dans lequel les moyens d'alignement actif sont agencés de sorte qu'un rayonnement lumineux entrant dans le dispositif photonique (200a) par la première entrée d'alignement (205a) en ressorte par la première sortie d'alignement (204a) ou de sorte qu'un rayonnement lumineux entrant dans l'élément photonique (200b) par la deuxième entrée d'alignement (204b) en ressorte par la deuxième sortie d'alignement (205b).

18. Procédé selon la revendication 17, dans lequel l'étape de couplage optique comprend l'émission d'un rayonnement lumineux par un laser d'alignement (300) et la détection dudit rayonnement par un photo détecteur (400), le laser d'alignement (300) et le photo détecteur étant agencés selon un premier agencement ou un deuxième agencement, le premier agencement permet à un rayonnement émis par le laser d'alignement (300), avant d'atteindre le photo détecteur (400), d'emprunter dans l'ordre le premier trajet d'alignement et le deuxième trajet d'alignement, tandis que le deuxième agencement permet à un rayonnement émis par le laser d'alignement (300), avant d'atteindre le photo détecteur (400), d'emprunter dans l'ordre le deuxième trajet d'alignement et le premier trajet d'alignement.

**Patentansprüche**

1. Photonische Baugruppe (100), die umfasst:

- eine photonische Vorrichtung (200a), umfassend einen ersten Block (200a1), der mit mindestens einem Ausgangsleiter (207a) und mindestens einem Eingangsleiter (208a) versehen ist, die jeweils mit mindestens einem ersten Ausgang (202a) und mindestens einem ersten Eingang (203a) zusammenwirken, die auf einer ersten Fläche (201a) des ersten Blocks (200a1) eingerichtet sind;
- ein photonisches Element (200b), das mit mindestens einem zweiten Ausgang (203b) und mindestens einem zweiten Eingang (202b) versehen ist, die auf einer zweiten Fläche (201b) des photonischen Elements eingerichtet sind und mit jeweils dem mindestens einen ersten Eingang (203a) und dem mindestens einen ersten Ausgang (202a) optisch gekoppelt sind;
- einen optischen Isolator (250), der sich auf dem Lichtausbreitungsweg, genannt erster Weg, zwischen dem mindestens einen ersten Ausgang (202a) und dem mindestens einen zweiten Eingang (202b) befindet und einer Strahlung, die sich entlang des ersten Wegs ausbreitet, eine erste Modengröße auferlegt;
- Anpassungsmittel (260), die sich auf dem Lichtausbreitungsweg, genannt zweiter Weg, zwischen dem mindestens einen ersten Eingang (203a) und dem mindestens einen zweiten Ausgang (203b) befinden, wobei die Anpassungsmittel (260) zum Auferlegen einer Strahlung, die sich entlang des zweiten Wegs ausbreitet, einer zweiten Modengröße konfiguriert sind, die gleich der ersten Modengröße ist, wobei die Anpassungsmittel (260) eine Platte mit einer Dicke Te umfassen, und wobei die Platte aus einem Material mit einem optischen Index Ne besteht, wobei die Dicke Te und der optische Index Te so angepasst sind, dass die zweite Modengröße gleich der ersten Modengröße ist.

2. Photonische Baugruppe (100) nach Anspruch 1, wobei der optische Isolator (250) einen optischen Index Ni und eine Dicke Ti aufweist und mit einem ersten Material mit optischem Index Noi und kumulierter Dicke Toi kombiniert ist, das sich auf dem ersten Weg befindet, die Platte mit einem zweiten Material mit optischem Index Noe und kumulierter Dicke Toe kombiniert ist, das sich auf dem zweiten Weg befindet, wobei der optische Index Ni, die Dicke Ti, der optische Index Noi, die kumulierte Dicke Toi, der optische Index Noe, die kumulierte Dicke Toe, der optische Index Ne und die Dicke Te die folgende Beziehung erfüllen:

$$\frac{Te}{Ne} + \frac{Toe}{Noe} = \frac{Ti}{Ni} + \frac{Toi}{Noi}$$

3. Photonische Baugruppe (100) nach einem der Ansprüche 1 bis 2, wobei die photonische Baugruppe (100) mit Aktivausrichtungsmitteln versehen ist, die einen ersten Ausrichtungseingang (205a), einen ersten Ausrichtungsausgang (204a), einen zweiten Ausrichtungseingang (204b) und einen zweiten Ausrichtungsausgang (205b) umfassen, die jeweils aus dem mindestens einen ersten Eingang (203a), dem mindestens einen ersten Ausgang (202a), dem mindestens einen zweiten Eingang (202b) und dem mindestens einen zweiten Ausgang (203b) ausgewählt sind, wobei der erste Ausrichtungsausgang (204a) und der zweite Ausrichtungseingang (204b) optisch gekoppelt sind und in dieser Reihenfolge einen ersten Ausrichtungsweg definieren, wobei der zweite Ausrichtungsausgang (205b) und der erste Ausrichtungseingang (205a) optisch gekoppelt sind und in dieser Reihenfolge einen zweiten Ausrichtungsweg definieren.

4. Photonische Baugruppe (100) nach Anspruch 3, wobei die Aktivausrichtungsmittel so angeordnet sind, dass eine Lichtstrahlung, die durch den ersten Ausrichtungseingang (205a) in die photonische Vorrichtung (200a) eintritt, durch den ersten Ausrichtungsausgang (204a) austritt, oder so, dass eine Lichtstrahlung, die durch den zweiten Ausrichtungseingang (204b) in das photonische Element (200b) eintritt, durch den zweiten Ausrichtungsausgang (205b) austritt.

5. Photonische Baugruppe (100) nach Anspruch 4, wobei die Aktivausrichtungsmittel einen Ausrichtungslaser (300) und einen Photodetektor (400) umfassen, die gemäß einer ersten Anordnung oder einer zweiten Anordnung angeordnet sind, wobei die erste Anordnung es einer Strahlung, die durch den Ausrichtungslaser (300) emittiert wird, ermöglicht, bevor sie den Photodetektor (400) erreicht, der Reihenfolge nach den ersten Ausrichtungsweg und den zweiten Ausrichtungsweg zu benutzen, während die zweite Anordnung es einer Strahlung, die durch den Ausrichtungslaser (300) emittiert wird, ermöglicht, bevor sie den Photodetektor (400) erreicht, der Reihenfolge nach den zweiten Ausrichtungsweg und den ersten Ausrichtungsweg zu prägen.

6. Photonische Baugruppe (100) nach einem der Ansprüche 1 bis 5, wobei die erste Fläche (201a) und die zweite Fläche (201b) einander gegenüberliegen, wobei sich der optische Isolator (250) und die Bündelanpassungsmittel (260) jeweils zwischen dem mindestens einen ersten Ausgang (202a) und dem mindestens einen zweiten Eingang (202b) einerseits und zwischen dem mindestens einen ersten Eingang (203a) und dem mindestens einen zweiten Ausgang (203b) andererseits einfügen.

7. Photonische Baugruppe (100) nach einem der Ansprüche 1 bis 6, wobei der mindestens eine Ausgangsleiter (207a) an einem dieser Enden mit dem mindestens einen ersten Ausgang (202a) endet und der mindestens eine Eingangsleiter (208a) an einem dieser Enden mit dem mindestens einen ersten Eingang (203a) endet.

8. Photonische Baugruppe (100) nach einem der Ansprüche 1 bis 5, wobei sich der mindestens eine Ausgangsleiter (207a) und mindestens ein Eingangsleiter (208a) in einer Ebene parallel zu der ersten Fläche (201a) erstrecken.

9. Photonische Baugruppe (100) nach Anspruch 8, wobei der mindestens eine Ausgangsleiter (207a) an einem seiner Enden mit einem Beugungsgitter in Entsprechung mit dem mindestens einen ersten Ausgang (202a) endet, und der mindestens eine Eingangsleiter (208a) an einem seiner Enden mit einem anderen Beugungsgitter in Entsprechung mit dem mindestens einen ersten Eingang (203a) endet.

10. Photonische Baugruppe (100) nach Anspruch 8 oder 9, wobei die photonische Baugruppe (100) ein Prisma umfasst, das auf dem ersten Weg und dem zweiten Weg eingerichtet ist.

11. Photonische Baugruppe (100) nach einem der Ansprüche 5 bis 10, wobei die photonische Vorrichtung (200a) mindestens einen Laser umfasst, der mit dem mindestens einen Ausgangsleiter (207a) zusammenwirkt.

12. Photonische Baugruppe (100) nach einem der Ansprüche 1 bis 11, wobei das photonische Element (200b) ein Netzwerk von optischen Fasern umfasst, die in Nuten eines zweiten Blocks montiert sind, der die zweite Fläche (201b) trägt, wobei vorteilhafterweise die optischen Fasern ein Ende aufweisen, das bündig mit der zweiten Fläche ist.

13. Photonische Baugruppe (100) nach einem der Ansprüche 1 bis 12, wobei die photonische Vorrichtung Linsen umfasst, die auf der ersten Fläche aufliegen und mit dem mindestens einen ersten Eingang (203a) und dem mindestens einen ersten Ausgang (202a) zusammenwirken.

14. Verfahren zum Ausbilden einer photonischen Baugruppe (100), das die folgenden Schritte umfasst:

- einen Schritt zum Bereitstellen einer photonischen Vorrichtung (200a), umfassend einen ersten Block (200a1), der mit mindestens einem Ausgangsleiter (207a) und mindestens einem Eingangsleiter (208a) versehen ist, die jeweils mit mindestens einem ersten Ausgang (202a) und mindestens einem ersten Eingang (203a) zusammenwirken, die auf einer ersten Fläche (201a) des ersten Blocks (200a) eingerichtet sind;
- einen Schritt zum Bereitstellen eines photonischen Elements (200b), das mit mindestens einem zweiten Ausgang (203b) und mindestens einem zweiten Eingang (202b) versehen ist, die auf einer zweiten Fläche (201b) des photonischen Elements eingerichtet sind;
- einen Schritt, der darin besteht, einen optischen Isolator (250) einzurichten, der sich auf dem Lichtausbreitungsweg, genannt erster Weg, zwischen dem mindestens einen ersten Ausgang (202a) und dem mindestens einen zweiten Eingang (202b) befindet und einer Strahlung, die sich entlang des ersten Wegs ausbreitet, eine erste Modengröße auferlegt;
- einen Schritt, der darin besteht, Anpassungsmittel (260) einzurichten, die sich auf dem Lichtausbreitungsweg, genannt zweiter Weg, zwischen dem mindestens einen ersten Eingang (203a) und dem mindestens einen zweiten Ausgang (203b) befinden, wobei die Anpassungsmittel (260) zum Auferlegen einer Strahlung, die sich entlang des zweiten Wegs ausbreitet, einer zweiten Modengröße konfiguriert sind, die gleich der ersten Modengröße ist;

das Verfahren ferner umfassend einen Schritt der optischen Kopplung, der dazu bestimmt ist, den mindestens einen zweiten Ausgang (203b) und den mindestens einen zweiten Eingang (202b) mit jeweils dem mindestens einen ersten Eingang (203a) und dem mindestens einen ersten Ausgang (202a) optisch zu koppeln, wobei die Anpassungsmittel (260) eine Platte einer Dicke Te umfassen, und wobei die Platte aus einem Material mit einem optischen Index Ne hergestellt ist, wobei die Dicke Te und der optische Index Te so angepasst sind, dass die zweite Modengröße gleich der ersten Modengröße ist.

15. Verfahren nach Anspruch 14, wobei der optische Isolator (250) einen optischen Index Ni und eine Dicke Ti aufweist und mit einem ersten Material mit optischem Index Noi und kumulierter Dicke Toi kombiniert ist, das sich auf dem ersten Weg befindet, die Platte mit einem zweiten Material mit optischem Index Noe und kumulierter Dicke Toe kombiniert ist, das sich auf dem zweiten Weg befindet, wobei der optische Index Ni, die Dicke Ti, der optische Index Noi, die kumulierte Dicke Toi, der optische Index Noe, die kumulierte Dicke Toe, der optische Index Ne und die Dicke Te die folgende Beziehung erfüllen:

$$\frac{Te}{Ne} + \frac{Toe}{Noe} = \frac{Ti}{Ni} + \frac{Toi}{Noi}$$

16. Verfahren nach einem der Ansprüche 14 bis 15, wobei der Schritt der optischen Kopplung Aktivausrichtungsmittel implementiert, wobei die Aktivausrichtungsmittel einen ersten Ausrichtungseingang (205a), einen ersten Ausrichtungsausgang (204a), einen zweiten Ausrichtungseingang (204b) und einen zweiten Ausrichtungsausgang (205b) umfassen, die jeweils aus mindestens einem ersten Eingang (203a), mindestens einem ersten Ausgang (202a), mindestens einem zweiten Eingang (202b) und mindestens einem zweiten Ausgang (203b) ausgewählt sind, wobei der erste Ausrichtungsausgang (204a) und der zweite Ausrichtungseingang (204b) optisch gekoppelt sind und in dieser Reihenfolge einen ersten Ausrichtungsweg definieren, wobei der zweite Ausrichtungsausgang (205b) und der erste Ausrichtungseingang (205a) optisch gekoppelt sind und in dieser Reihenfolge einen zweiten Ausrichtungsweg definieren, der Schritt der optischen Kopplung umfassend die Emission einer Lichtstrahlung, die, wenn sie einen des ersten oder des zweiten Ausrichtungswegs benutzt, anschließend den anderen des ersten oder des zweiten Ausrichtungswegs benutzt.

17. Verfahren nach Anspruch 16, wobei die Aktivausrichtungsmittel so angeordnet sind, dass eine Lichtstrahlung, die durch den ersten Ausrichtungseingang (205a) in die photonische Vorrichtung (200a) eintritt, durch den ersten Ausrichtungsausgang (204a) austritt, oder so, dass eine Lichtstrahlung, die durch den zweiten Ausrichtungseingang (204b) in das photonische Element (200b) eintritt, durch den zweiten Ausrichtungsausgang (205b) austritt.

18. Verfahren nach Anspruch 17, wobei der Schritt der optischen Kopplung die Emission einer Lichtstrahlung durch einen Ausrichtungslaser (300) und die Detektion dieser Strahlung durch einen Photodetektor (400) umfasst, wobei der Ausrichtungslaser (300) und der Photodetektor gemäß einer ersten Anordnung oder einer zweiten Anordnung angeordnet sind, wobei die erste Anordnung es einer Strahlung, die durch den Ausrichtungslaser (300) emittiert wird, ermöglicht, bevor sie den Photodetektor (400) erreicht, der Reihenfolge nach den ersten Ausrichtungsweg und den zweiten Ausrichtungsweg zu benutzen, während die zweite Anordnung es einer Strahlung, die durch den Ausrichtungslaser (300) emittiert wird, ermöglicht, bevor sie den Photodetektor (400) erreicht, der Reihenfolge nach den zweiten Ausrichtungsweg und den ersten Ausrichtungsweg zu benutzen.

**Claims**

1. Photonic assembly (100) which comprises:

   - a photonic device (200a) comprising a first block (200a1) equipped with at least one output guide (207a) and at least one input guide (208a) cooperating respectively with at least one first output (202a) and at least one first input (203a) which are disposed on a first face (201a) of the first block (200a1);
   - a photonic element (200b) equipped with at least one second output (203b) and at least one second input (202b) which are disposed on a second face (201b) of the photonic element and are optically coupled respectively with the at least one first input (203a) and the at least one first output (202a);

   - an optical isolator (250) interposing in the light propagation path, referred to as the first path, between the at least one first output (202a) and the at least one second input (202b) and imposing a first mode size on a beam propagating along the first path;
   - adjustment means (260) interposing in the light propagation path, referred to as the second path, between the at least one first input (203a) and the at least one second output (203b), the adjustment means (260) being configured to impose a second mode size equal to the first mode size on a beam propagating along the second path, the adjustment means (260) comprise a plate of thickness Te, and said plate being made of a material of optical index Ne, the thickness Te and the optical index Te being adjusted so that the second mode size is equal to the first mode size.

2. Photonic assembly (100) according to claim 1, wherein the optical isolator (250) has an optical index Ni and a thickness Ti and is combined with a first material, of optical index Noi and of cumulative thickness Toi, interposing in the first path, the plate is combined with a second material, of optical index Noe and of cumulative thickness Toe, interposing in the second path, the optical index Ni, the thickness Ti, the optical index Noi, the cumulative thickness Toi, the optical index Noe, the cumulative thickness Toe, the optical index Ne and the thickness Te satisfying the following relationship:

$$\frac{Te}{Ne} + \frac{Toe}{Noe} = \frac{Ti}{Ni} + \frac{Toi}{Noi}$$

3. Photonic assembly (100) according to either of claims 1 and 2, wherein the photonic assembly (100) is equipped with active-alignment means which comprise a first alignment input (205a), a first alignment output (204a), a second alignment input (204b) and a second alignment output (205b) which are selected respectively from the at least one first input (203a), the at least one first output (202a), the at least one second input (202b) and the at least one second output (203b), the first alignment output (204a) and the second alignment input (204b) are optically coupled and in this order define a first alignment path, the second alignment output (205b) and the first alignment input (205a) are optically coupled and in this order define a second alignment path.

4. Photonic assembly (100) according to claim 3, wherein the active-alignment means are arranged such that a light beam entering the photonic device (200a) via the first alignment input (205a) exits therefrom via the first alignment output (204a) or such that a light beam entering the photonic element (200b) via the second alignment input (204b) exits therefrom via the second alignment output (205b).

5. Photonic assembly (100) according to claim 4, wherein the active-alignment means comprise an alignment laser (300) and a photodetector (400) which are arranged according to a first arrangement or a second arrangement, the first arrangement allows a beam emitted by the alignment laser (300), before reaching the photodetector (400), to follow the first alignment path and then the second alignment path, while the second arrangement allows a beam emitted by the alignment laser (300), before reaching the photodetector (400), to imprint the second alignment path and then the first alignment path.

6. Photonic assembly (100) according to any of claims 1 to 5, wherein the first face (201a) and the second face (201b) face one another, the optical isolator (250) and the beam adjustment means (260) being positioned respectively between the at least one first output (202a) and the at least one second input (202b) and between the at least one first input (203a) and the at least one second output (203b).

7. Photonic assembly (100) according to any of claims 1 to 6, wherein the at least one output guide (207a) terminates at one of the ends thereof in the at least one first output (202a), and the at least one input guide (208a) terminates at one of the ends thereof in the at least one first input (203a).

8. Photonic assembly (100) according to any of claims 1 to 5, wherein the at least one output guide (207a) and at least one input guide (208a) extend in a plane parallel to the first face (201a).

9. Photonic assembly (100) according to claim 8, wherein the at least one output guide (207a) terminates at one of its ends in a diffraction grating communicating with the at least one first output (202a), and the at least one input guide (208a) terminates at one of its ends in another diffraction grating communicating with the at least one first input (203a).

10. Photonic assembly (100) according to claim 8 or 9, wherein said photonic assembly (100) comprises a prism disposed in the first path and the second path.

11. Photonic assembly (100) according to any of claims 5 to 10, wherein the photonic device (200a) comprises at least one laser cooperating with the at least one output guide (207a).

12. Photonic assembly (100) according to any of claims 1 to 11, wherein the photonic element (200b) comprises an array of optical fibers which are mounted in grooves in a second block bearing the second face (201b), the optical fibers advantageously comprise an end flush with the second face.

13. Photonic assembly (100) according to any of claims 1 to 12, wherein the photonic device comprises lenses resting on the first face and cooperating with the at least one first input (203a) and the at least one first output (202a).

14. Method for forming a photonic assembly (100), which method comprises the following steps:

- a step of providing a photonic device (200a) comprising a first block (200a1) equipped with at least one output guide (207a) and at least one input guide (208a) cooperating respectively with at least one first output (202a) and at least one first input (203a) which are disposed on a first face (201a) of the first block (200a);
- a step of providing a photonic element (200b) equipped with at least one second output (203b) and at least one second input (202b) which are disposed on a second face (201b) of the photonic element;
- a step consisting in disposing an optical isolator (250) interposing in the light propagation path, referred to as the first path, between the at least one first output (202a) and the at least one second input (202b) and imposing a first mode size on a beam propagating along the first path;
- a step consisting in disposing adjustment means (260) interposing in the light propagation path, referred to as the second path, between the at least one first input (203a) and the at least one second output (203b), the adjustment means (260) being configured to impose a second mode size equal to the first mode size on a beam propagating along the second path;

the method further comprising an optical coupling step for optically coupling the at least one second output (203b) and the at least one second input (202b) respectively with the at least one first input (203a) and the at least one first output (202a), the adjustment means (260) comprise a plate of thickness Te, and said plate being made of a material of optical index Ne, the thickness Te and the optical index Te being adjusted so that the second mode size is equal to the first mode size.

15. Method according to claim 14, wherein the optical isolator (250) has an optical index Ni and a thickness Ti and is combined with a first material, of optical index Noi and of cumulative thickness Toi, interposing in the first path, the plate is combined with a second material, of optical index Noe and of cumulative thickness Toe, interposing in the second path, the optical index Ni, the thickness Ti, the optical index Noi, the cumulative thickness Toi, the optical index Noe, the cumulative thickness Toe, the optical index Ne and the thickness Te satisfying the following relationship:

$$\frac{Te}{Ne} + \frac{Toe}{Noe} = \frac{Ti}{Ni} + \frac{Toi}{Noi}$$

16. Method according to either of claims 14 and 15, wherein the optical coupling step implements active-alignment means, the active-alignment means comprise a first alignment input (205a), a first alignment output (204a), a second alignment input (204b) and a second alignment output (205b) which are selected respectively from the at least one first input (203a), the at least one first output (202a), the at least one second input (202b) and the at least one second output (203b), the first alignment output (204a) and the second alignment input (204b) are optically coupled and in this order define a first alignment path, the second alignment output (205b) and the first alignment input (205a) are optically coupled and in this order define a second alignment path, the optical coupling step comprising the emission of a light beam which, on following one of the first and the second alignment path, then follows the other of the first and the second alignment path.

17. Method according to claim 16, wherein the active-alignment means are arranged such that a light beam entering the photonic device (200a) via the first alignment input (205a) exits therefrom via the first alignment output (204a) or such that a light beam entering the photonic element (200b) via the second alignment input (204b) exits therefrom via the second alignment output (205b).

18. Method according to claim 17, wherein the optical coupling step comprises an alignment laser (300) emitting a light beam and a photodetector (400) detecting said beam, the alignment laser (300) and the photodetector being arranged according to a first arrangement or a second arrangement, the first arrangement allows a beam emitted by the alignment laser (300), before reaching the photodetector (400), to follow the first alignment path and then the second alignment path, while the second arrangement allows a beam emitted by the alignment laser (300), before reaching the photodetector (400), to follow the second alignment path and then the first alignment path.

[Fig. 1]

[Fig. 2]

[Fig. 3]

1c

3c 4c

2c 5c

6c

[Fig. 4]

1c

3c 4c

2c 5c

7c 6c

[Fig. 5]

[Fig. 6]

[Fig. 7]

200a

200a1

201a

208a

203a

207a

202a

270

[Fig. 8]

200b1

201b

203b

208b

202b

207b

201b

200b

[Fig. 9]

[Fig. 10]

[Fig. 11]

[Fig. 12]

[Fig. 13]

[Fig. 14]

[Fig. 15]

200a

200a1

208a

212b

207a

211a

[Fig. 16]

100

200b

213

201b 207b

201a 202a

210 250

200b

207a

211a

[Fig. 17]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9335480 B1